Europäisches Patentamt

European Patent Office

Office européen des brevets

(19)

(11) Veröffentlichungsnummer: **0 076 437**
**B1**

(12) **EUROPÄISCHE PATENTSCHRIFT**

(45) Veröffentlichungstag der Patentschrift:
**24.07.85**

(21) Anmeldenummer: **82108831.7**

(22) Anmeldetag: **24.09.82**

(51) Int. Cl.⁴: **H 01 B 7/28**

(54) Längswasserdichte elektrische Kabel.

(30) Priorität: **03.10.81 DE 3139386**

(43) Veröffentlichungstag der Anmeldung:
**13.04.83 Patentblatt 83/15**

(45) Bekanntmachung des Hinweises auf die Patenterteilung:
**24.07.85 Patentblatt 85/30**

(84) Benannte Vertragsstaaten:
**AT CH DE FR GB IT LI SE**

(56) Entgegenhaltungen:
**FR - A - 1 571 555**
**FR - A - 2 291 585**
**GB - A - 1 246 245**
**GB - A - 1 460 718**
**US - A - 2 454 625**
**US - A - 3 621 110**

(73) Patentinhaber: **HOECHST AKTIENGESELLSCHAFT,
Postfach 80 03 20, D-6230 Frankfurt am Main 80 (DE)**

(72) Erfinder: **Graetz, Reinhardt, Schönbergstrasse 92,
D-6200 Wiesbaden (DE)**
Erfinder: **Michel, Wolfgang, Am Hohen Stein 24,
D-6200 Wiesbaden (DE)**
Erfinder: **Dallmann, Hermann, Dr., Erbsenacker 29,
D-6200 Wiesbaden-Naurod (DE)**
Erfinder: **Kornell, Wolfgang, Dr., Am Hohen Stein 32,
D-6200 Wiesbaden (DE)**

## Beschreibung

Die Erfindung betrifft elektrische Kabel mit wenigstens einlagigem Schutzmantel auf Basis von thermoplastischem Kunststoff, bei denen die mit wasserabweisender chemischer Dichtmasse imprägnierte Kabelseele aus miteinander verdrillten, bevorzugt kunststoff-isolierten, Metalladern von einer rohrförmigen wasserabweisenden Sperrhülle umgeben ist, die mit ihrer Innenseite unmittelbar und press-eng an die imprägnierte Kabelseele angrenzt.

Bei Wassereinbruch in das Kabel infolge Beschädigung desselben verhindert die Sperrhülle, dass sich Feuchtigkeit in der Kabelseele ausbreitet.

Die Kabelseele wird nachfolgend «elektrisches Leiterseil» bezeichnet.

Definitionsgemäss umfasst die Erfindung auch elektrische Kabel genannter Ausbildung, bei denen das elektrische Leiterseil unmittelbar von einer aus Metalldrähten bestehenden elektrischen Abschirmung umhüllt ist, wobei sich in den Lücken der Abschirmung ebenfalls bezeichnete Dichtmasse befindet. An die elektrische Abschirmung grenzt dabei unmittelbar und dieser press-eng anliegend bezeichnete rohrförmige Sperrhülle an.

Bei elektrischen Kabeln besteht bei Beschädigung derselben die Gefahr, dass durch die Schadstelle von aussen Feuchtigkeit in deren elektrisches Leiterseil eindringt und sich dann entlang von in diesem vorhandenen, sich in Leiterseil-Längsrichtung ausdehnenden Lücken zwischen den verseilten Adern desselben axial ausbreitet und zur Beschädigung des Kabels führt, insbesondere dann, wenn die Feuchtigkeit auf diese Weise Kabelendabschlüsse und/oder Verbindungsmuffen erreicht und dort Korrosion bewirkt. Diese Gefahr besteht insbesondere dann, wenn das elektrische Leiserseil aus kunststoffisolierten verseilten Metalladern besteht, wie dies bei Nachrichtenkabeln der Fall ist, weil diese die axiale Ausbreitung von in das Leiterseil von aussen eingedrungener Flüssigkeit nicht behindern.

Es sind sogenannte längswasserdichte elektrische Kabel bekannt, bei denen bei Beschädigung derselben axiale Ausbreitung von Wasser in der Kabelseele durch eine diese umgebende, im Kabel innen liegende Einlage bzw. Hülle verhindert wird, die aus chemischem Material auf Basis von Cellulosederivaten, acrylischem Polymerisat, Polyvinylalkohol oder gelfähigem Polyurethan besteht (DE-AS-2 006 359, DE-AS-1 540 407, DE-AS-1 790 202, DE-AS-1 665 589, DE-OS-2 007 163 sowie DE-OS-2 947 082). Die bekannten Einlagen bzw. Hüllen sind aufgrund ihres chemischen Aufbaus befähigt, Wasser aufzunehmen und unter erheblicher Quellung in den Gelzustand überzugehen. Durch den Quellvorgang und der damit verbundenen erheblichen Volumenvergrösserung der bekannten Einlagen bzw. Hüllen wird eine Barriere gebildet, die zunächst axiales Ausbreiten von in die Kabelseele eingedrungenem Wasser verhindert.

Der Erfindung liegt die Aufgabe zugrunde, ein elektrisches Kabel der im Oberbegriff des Anspruchs 1 angegebenen Ausbildung vorzuschlagen, bei dem das elektrische Leiterseil unmittelbar von einer rohrförmigen Sperrhülle umgeben ist, die bewirkt, dass bei Beschädigung des Kabels von aussen in dieses eintretendes Wasser daran gehindert wird, sich im elektrischen Leiterseil axial auszubreiten.

Die der Erfindung zugrundeliegende Aufgabe wird gelöst durch ein elektrisches Kabel der in Anspruch 1 angegebenen Ausbildung.

Vorteilhafte Ausgestaltungen der Erfindung sind in den auf Anspruch 1 rückbezogenen Unteransprüchen konkretisiert.

Das erfindungsgemässe elektrische Kabel umfasst ein elektrisches Leiterseil aus miteinander verseilten, zur elektrichen Stromleitung befähigten Metalladern; die miteinander verseilten Einzeladern des elektrischen Leiterseils sind bevorzugt jeweils kunststoffummantelt. Praktisch sämtliche im wesentlichen längsweise oder wendelförmig verlaufende Hohlräume bzw. Kavitäten des elektrischen Leiterseils sind mit wasserabweisender Dichtmasse ausgefüllt, die bei Raumtemperatur gelartig pastöse Konsistenz besitzt. Die hydrophobe wasserundurchlässige Dichtmasse besteht bevorzugt aus mit Wasser nicht mischbarem, in Wasser unlöslichem, organisch-chemischem Material auf Petroleum- bzw. Erdölbasis. Derartige Dichtmassen sind unter der Bezeichnung «Petro-Jelly» bekannt, beispielsweise das von der Firma Esso unter der Bezeichnung «Petrolatum A» in den Handel gebrachte Produkt.

Das mit bezeichneter Dichtmasse wie angegeben «imprägnierte» elektrische Leiterseil des Kabels ist über seinen gesamten Umfang und bevorzugt über seine gesamte Länge von einer im Kabel innen liegenden, rohrförmigen, elastischen Sperrhülle aus Kunststoff umgeben, die mit ihrer Innenseite an das imprägnierte Leiterseil unmittelbar und press-eng angrenzt.

Die rohrförmige Sperrhülle besteht aus wenigstens zweilagigem Band, das entweder wendelartig und sich überlappend zu einem Rohr um das elektrische Leiterseil gewickelt ist und diesem press-eng anliegt, oder aus einem längsaxial geschlitzten, dem elektrischen Leiterseil press-eng anliegenden Rohr mit längsaxialer Überlappungszone aufgebaut ist; letzteres entsteht dadurch, dass man das wenigstens zweilagige Band längsaxial derart um das elektrische Leiterseil, um seine Längsachse als Biegeachse, biegt, dass seine Seitenkanten unter Bildung eines Überlappungsbereiches parallel abständig zueinander verlaufen.

Die Dichtigkeit der wie angegeben ausgebildeten rohrförmigen Sperrhüllen gegenüber Durchtritt von Flüssigkeit wird dadurch gewährleistet, dass unmittelbar an ihrer Aussenseite ein wenigstens einlagiger Schutzmantel, bspw. einem solchen aus thermoplastischem Kunststoff, bspw. aus Polyethylen, angrenzt.

Das die Sperrhülle bildende, wenigstens zweilagige Band besteht aus einer für Flüssigkeiten undurchlässigen hydrophoben Trägerfolie aus wasserunlöslichem Kunststoff mit praktisch vernachlässigbar geringer Wasseraufnahmefähigkeit, die bei Wassereinwirkung praktisch nicht quillt, und einer hydrophoben Schicht aus Polymerfibriden auf wenigstens einer Oberfläche der Trägerfolie. Die Polymerfibridschicht bzw. Polymerfibridschichten sind jeweils durch Verklebung oder Verschweissung mit der Trägerfolie verbunden. Bevorzugt besitzt die Trägerfolie hohe Festigkeit, sie besteht beispielsweise aus Polypropylen, insbesondere vorteilhaft besteht sie aus streckorientierter Folie aus Polyester, beispielsweise aus streckorientierter Polyethylenterephthalatfolie. Die Fibridschicht bzw. die Fibridschichten besteht bzw. bestehen jeweils aus hydrophoben, bei Wassereinwirkung nicht quellenden Polyolefinfibriden, vorteilhaft solchen aus Polyethylen, bevorzugt aus Polypropylen. Die Fibride haben stark verästelte Struktur sowie unregelmässigen Durchmesser. Die Fibride haben vorteilhaft eine durchschnittliche Länge im Bereich von 0,8 bis 2,5 mm. Die Fibride der Fibridschicht bzw. der Fibridschichten befinden sich jeweils in regelloser Anordnung zueinander; infolge ihrer verästelten Struktur liegen die die Schicht bildenden Fibride miteinander verfilzt vor. Die kapillarartigen Hohlräume in der Fibridschicht bzw. in den Fibridschichten kommunizieren jeweils.

Die Fibridschicht bzw. die Fibridschichten hat bzw. haben jeweils eine sehr grosse Gesamtoberfläche, die durch die Oberflächen der Fibride gebildet wird, vorteilhaft beträgt die Gesamtoberfläche der Schicht jeweils 4 bis 10 m$^3$/g Schicht. Vergleichsweise hat eine Schicht aus 3 denier Polyolefinstapelfaser eine Gesamtoberfläche entsprechend 0,2 m$^3$/g Schicht. Die Dicke der Fibridschicht wird derart gewählt, dass sie in Kombination mit der Trägerfolie die angestrebte Sperrfunktion erfüllt.

Die Fibridschicht bzw. die Fibridschichten hat bzw. haben jeweils hohes spezifisches Adsorptionsvermögen für Kohlenwasserstoffe, sie sind deshalb befähigt, diese aufzunehmen und durch Benetzung festzuhalten. Infolge der besonderen baulichen Struktur der Fibridschicht bzw. der Fibridschichten breitet sich in diese eingedrungene Dichtmasse von selbst aus und wird in der Schicht durch Kapillar- bzw. Adhäsionskräfte gehalten.

Die Dicke der Trägerfolie, welche die rohrförmige Hülle bildet, ist für deren Funktion nicht wesentlich, sofern sie hinreichende Festigkeit der Trägerfolie gewährleistet.

Die rohrförmige Sperrhülle des Kabels ist über ihren gesamten Umfang sowie ihre gesamte Länge von einem wenigstens einlagig aufgebauten Schutzmantel umgeben. Der Schutzmantel kann beispielsweise zweilagig derart ausgebildet sein, dass er aus einer ersten Lage aus Polyolefin, beispielsweise Polyethylen, besteht, die mit ihrer Innenseite unmittelbar an die Aussenseite der rohrförmigen Sperrhülle angrenzt, und einer zweiten Lage, beispielsweise aus weichgemachtem Polyvinylchlorid. Die Innenseite der zweiten Lage grenzt an die erste Lage an, die Aussenseite der zweiten Lage bildet die Kabelaussenseite.

Es ist auch möglich, dass der Schutzmantel derart aufgebaut ist, dass sich zwischen erster und zweiter Lage eine dritte Lage aus Metall befindet.

Die wie angegeben aufgebaute rohrförmige Sperrhülle des Kabels, durch welche die mit Dichtmasse imprägnierte Kabelseele umhüllt ist, besitzt wenigstens eine Oberfläche, die durch eine Fibridschicht mit den genannten Eigenschaften gebildet wird.

Bei einer ersten Ausbildungsform der Erfindung bildet die Fibridschicht die Innenseite der Rohrhüllen, diese grenzt dabei unmittelbar sowie press-eng an die mit Dichtmasse imprägnierte Kabelseele an. Die andere Seite der Rohrhülle grenzt unmittelbar an die innerste Lage des Schutzmantels an, der die mit der rohrförmigen Hülle umgebene Kabelseele umgibt.

Bei einer zweiten Ausbildungsform der Erfindung wird die Aussenseite der rohrförmigen Sperrhülle durch eine Fibridschicht gebildet; diese grenzt unmittelbar an den Schutzmantel des Kabels an.

Die fibridschichtfreie Innenseite der Rohrhülle gemäss der zweiten Erfindungsvariante grenzt unmittelbar an die mit Dichtmasse imprägnierte Kabelseele und liegt dieser press-eng an.

Bei einer dritten Ausbildungsform der Erfindung besteht sowohl die Aussenseite als auch die Innenseite derselben aus einer Fibridschicht; zwischen beiden Fibridschichten befindet sich eine Kunststofffolie, welche die Fibridschichten jeweils trägt; die eine Fibridschicht grenzt unmittelbar an das mit Dichtmasse imprägnierte Leiterseil und liegt diesem press-eng an, die andere grenzt unmittelbar an die Innenseite des Kabelschutzmantels an.

Bei denjenigen Ausbildungsformen der Erfindung, bei denen die Innenseiten der Sperrhüllen jeweils durch Fibridschichten gebildet werden, enthalten diese jeweils Dichtmasse, d.h. praktisch sämtliche Hohlräume der bezeichneten Fibridschichten sind mit dieser gefüllt. Diese mit Dichtmasse imprägnierten Fibridschichten bilden jeweils ein zweiphasighydrophobes System, jeweils bestehend aus einer hydrophoben Phase in Form einer Schicht aus baulich-strukturell formbeständigen hydrophoben Polymerfibriden und einer hydrophoben Phase in Form von pastöser Dichtmasse, die sich in den Hohlräumen der Fibridschicht befindet.

Durch die rohrförmige Sperrhülle des Kabels und dem press-engen Anliegen derselben am mit Dichtmasse imprägnierten Leiterseil des Kabels wird bewirkt, dass in dieses etwa von aussen gelangte Feuchtigkeit das Leiterseil nicht erreicht bzw. sich in bzw. an diesem nicht axial auszubreiten vermag, weil praktisch sämtliche Hohlräume im Leiterseil bzw. die Hohlräume der an dieses angrenzenden Fibridschicht auch bei Raumtemperatur vollständig mit pastöser Dichtmasse ausgefüllt sind.

Das Kabel ist beispielsweise herstellbar, indem man ein elektrisches Leiterseil aus einer Vielzahl miteinander verseilter, kunststoffisolierter Energieadern aus Metall über seinen gesamten Umfang und seine gesamte Länge mit einem beispielsweise zweilagigen Band wendelförmig derart umwickelt, dass sich jeweils benachbarte Bandwendel jeweils teilweise überlappen und der gewickelte Bandwendel eine rohrförmige Hülle um das elektrische Leiterseil bildet. Diese Hülle, die als Sperrhülle bezeichnet wird, liegt dem Leiterseil unmittelbar und press-eng an. Das press-enge Anliegen der rohrförmigen Hülle am Leiterseil ergibt sich als Folge der Zugspannung, die beim wendelförmigen Wickeln des Bandes zur Hülle auf das Band ausgeübt wird. Die aus wendelförmig gewickeltem Band bestehende Sperrhülle übt daher über die gesamte Länge und dem gesamten Umfang des Leiterseils praktisch gleichmässig Presskraft auf dieses aus, die jeweils in Richtung seiner Längsachse wirkt.

Das zweilagige Band besteht aus einer elastischen, wasserbeständigen, unter Wassereinwirkung nicht quellenden sowie wasserundurchlässigen Kunststoffolie als Träger und einer auf deren Oberfläche befindlichen hydrophoben Schicht aus Polypropylen- oder Polyethylen-Fibriden. Der Träger des Bandes hat vorteilhaft hohe Festigkeit und besteht bevorzugt aus streckorientierter Folie aus Polyester, insbesondere bevorzugt aus streckorientierter Folie aus Polyethylenterephthalat oder aus Polypropylenfolie.

Das Band wird dabei wie angegeben derart zu einer rohrförmigen Hülle um das elektrische Leiterseil gewickelt, dass die Innenseite der Hülle durch eine hydrophobe Fibridschicht gebildet ist.

Mit einer Injektionsvorrichtung wird dann axial in das Leiterseil eine hinreichende Menge sich in Folge von Erhitzung im flüssigen Zustand befindliche wasserabstossende Dichtmasse (Petro-Jelly) eingespritzt.

Nach Abkühlung der Dichtmasse auf Raumtemperatur füllt diese als gelartig-pastöse Masse praktisch sämtliche im Leiterseil vorhandene Hohlräume aus. Beim Einspritzen der Dichtmasse in das Leiterseil gelangt diese auch in die an das Leiterseil unmittelbar angrenzende Fibridschicht der Sperrhülle und breitet sich in dieser aus. Nach Abkühlung der in die Fibridschicht eingedrungenen Dichtmasse auf Raumtemperatur, sind auch in dieser praktisch sämtliche Hohlräume mit Dichtmasse in gelartig-pastösem Zustand gefüllt.

In bekannter Weise wird dann das von der Sperrhülle umgebene Leiterseil über seine gesamte Länge und seinen gesamten Umfang mit einem beispielsweise zweilagig ausgebildeten Schutzmantel aus thermoplastischem Kunststoff umgeben.

Die erste Lage des Schutzmantels, deren Innenseite unmittelbar an die Aussenseite der Sperrhülle angrenzt, besteht beispielsweise aus Polyethylen. Die zweite Schutzmantellage ist beispielsweise aus weichgemachtem Polyvinylchlorid aufgebaut, ihre Innenseite grenzt unmittelbar an die Aussenseite der ersten Schutzmantellage an, ihre zweite Oberfläche bildet die Kabelaussenseite.

Die beiden Lagen des Schutzmantels werden in der angegebenen Reihenfolge jeweils nacheinander aufgebracht, indem man sie jeweils in bekannter Weise durch Extrusion einer Kunststoffschmelze ausbildet.

Zur Herstellung einer zweiten Erfindungsvariante geht man in derselben Weise vor wie in der zuvor angegebenen Herstellung der ersten Erfindungsvariante, jedoch mit der Abwandlung, dass man das wie angegeben ausgebildete zweilagige Band in der Weise zu einer rohrförmigen Hülle wie angegeben um das Leiterseil wickelt, dass die Aussenseite der gebildeten Sperrhülle durch die Fibridschicht des Bandes gebildet wird. Die Sperrhülle grenzt mit ihrer aus Folie bestehenden Innenseite unmittelbar und press-eng an das Leiterseil an, die Fibridschicht der Hülle ist unmittelbar benachbart an der Innenseite der aus Polyethylen bestehenden Schutzmantellage des Kabels.

Beim Einspritzen der Dichtmasse in das Leiterseil kommt diese daher mit der Fibridschicht nicht in Kontakt; die dichtmassefreie Fibridschicht grenzt mit ihrer Oberfläche unmittelbar an die innere Schutzmantellage aus Polyethylen an.

Die Herstellung der dritten Erfindungsvariante erfolgt entsprechend der Herstellung der ersten, jedoch mit der Abwandlung, dass die rohrförmige Sperrhülle aus einem Band gewickelt wird, das aus einem Träger in Form von Kunststoffolie mit jeweils einer Fibridschicht auf den Oberflächen derselben besteht.

Die innere Lage des zweilagigen Kabelschutzmantels grenzt an die dichtmassenfreie Fibridschicht der Schutzhülle an.

Beim Einspritzen der Dichtmasse in das Leiterseil der Kabel gemäss der dritten Erfindungsvariante kommt diese nur mit der Fibridschicht, die unmittelbar an das Leiterseil angrenzt, in Kontakt, und füllt nur diese aus.

Die innere Lage des zweilagigen Kabelschutzmantels grenzt unmittelbar an die dichtmassefreie Fibridschicht der Sperrhülle an.

Bei bekannten elektrischen Kabeln mit in diesen innenliegenden, sogenannten Längswasserdichtigkeit bewirkenden Hüllen, welche die Kabelseele umgeben, beruht die angestrebte Wirkung der Hüllen auf der Fähigkeit des diese bildenden Materials, bei Kontakt mit Wasser, unter Aufnahme desselben und Quellung, sein Volumen erheblich zu vergrössern.

Gemäss der Erfindung beruht der angestrebte wasserabdichtende Effekt der Sperrhülle auf der besonderen baulich-strukturellen Ausbildung derselben und der hydrophoben Eigenschaften der diese bildenden baulichen Elemente: Folie und Fibridschicht(en).

Die Erfindung wird durch eine drei Figuren umfassende Zeichnung beispielhaft erläutert.

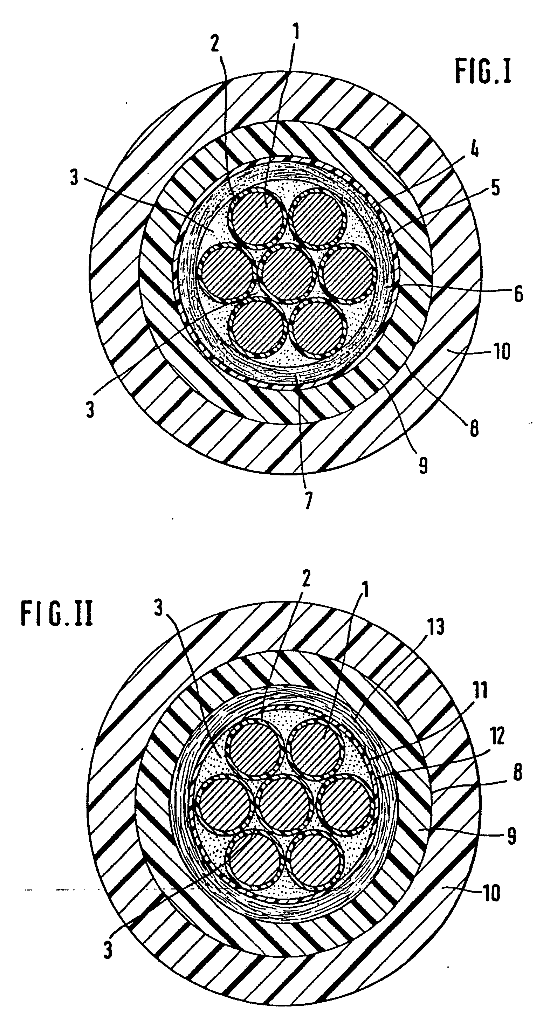

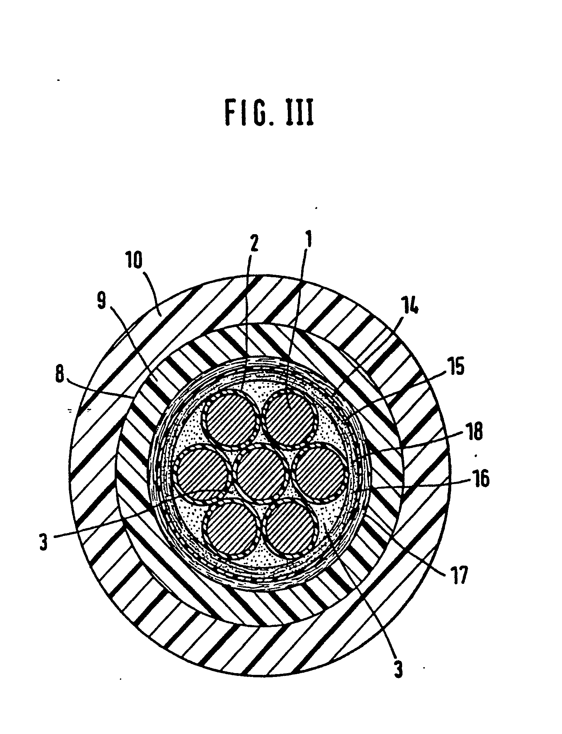

Die Figuren I bis III der Zeichnung stellen jeweils in schematischer Darstellung und im Querschnitt besondere Ausbildungsformen (Varianten der Erfindung) dar.

Die Zeichnung ist nicht massstabgerecht; dies gilt insbesondere für die Gesamtwanddicke der Sperrhülle in bezug auf die Gesamtdicke des Kabelschutzmantels bzw. auf die jeweiligen Dicken der diesen bildenden Lagen. Auch das Verhältnis der Dicken von Folie und Fibridschicht(en) der Sperrhülle sind nicht massstabgerecht dargestellt.

Fig. I zeigt ein Kabel gemäss einer ersten Ausbildungsform der Erfindung (erste Erfindungsvariante) mit einer zweilagigen Sperrhülle. Die Innenseite der Sperrhülle wird durch eine Fibridschicht gebildet.

In Fig. II ist eine weitere Ausbildungsform der Erfindung (zweite Erfindungsvariante) dargestellt, bei der das Kabel eine zweilagige Sperrhülle umfasst, deren Aussenseite durch eine Fibridschicht gebildet wird.

Fig. III zeigt ein Kabel gemäss einer dritten Ausführungsform (dritte Erfindungsvariante), dessen Sperrhülle dreilagig und aus einem Band wendelförmig gewickelt ist, das aus einer wasserbeständigen Kunststoffolie mit jeweils einer Fibridschicht auf seinen Oberflächen besteht.

In Fig. I bedeutet 1 eine Energieader des elektrischen Leiterseils, 2 eine die Energieader umhüllende und isolierende Kunststoffschicht, 3 die mit Dichtmasse ausgefüllten Hohlräume des Leiterseils, 4 die Sperrhülle des Kabels, 5 ist der aus Folie bestehende Teil derselben, 6 ist eine Fibridschicht der Sperrhülle, 7 ist Dichtmasse in der Fibridschicht, 8 ist ein zweilagiger Schutzmantel des Kabels, 9 dessen an die Sperrhülle unmittelbar angrenzende erste Lage und 10 die zweite Lage des Schutzmantels.

In Fig. II haben die Ziffern 1, 2, 3, 8, 9 und 10 dieselbe Bedeutung wie in Fig. I. Es bedeutet in Fig. II die Ziffer 11 die zweilagige Sperrhülle, 12 die Folie, welche die Innenseite der Sperrhülle und 13 eine Fibridschicht, welche die Aussenseite derselben bildet.

In der Fig. III haben die Ziffern 1, 2, 3, 8, 9 und 10 dieselbe Bedeutung wie in den Fig. I bzw. II; in der Fig. III bedeutet 14 eine dreilagige Sperrhülle, 15 ist eine Folie in dieser, 16 eine Fibridschicht, die die Innenseite der Sperrhülle und 18 eine Fibridschicht, welche die Aussenseite derselben bildet, 18 ist Dichtmasse in der Fibridschicht 16.

## Patentansprüche

1. Elektrisches Kabel mit wenigstens einlagigem Schutzmantel (9, 10) und einer im Kabel innenliegenden Sperrhülle (4, 11, 14), welche die mit Dichtmasse (3) imprägnierte Kabelseele (2) umgibt, dadurch gekennzeichnet, dass die rohrförmige Sperrhülle (4, 11, 14) aus wenigstens zweilagigem Band aufgebaut ist, das aus einer hydrophoben Trägerfolie (5, 12, 15) aus Kunststoff und einer hydrophoben Fibridschicht (6, 13, 16, 17) auf wenigstens einer Oberfläche der Trägerfolie (5, 12, 15) besteht, wobei die Innenseite der rohrförmigen Sperrhülle (4, 11, 14) unmittelbar und press-eng an die mit Dichtmasse (3) imprägnierte Kabelseele (2) und ihre Aussenseite unmittelbar an die Innenseite des wenigstens einlagigen Schutzmantels (9, 10) angrenzt.

2. Elektrisches Kabel nach Anspruch 1, dadurch gekennzeichnet, dass die rohrförmige Sperrhülle (4) aus einem wendelförmig sowie press-eng um die Kabelseele (2) gewickelten, wenigstens zweilagigen Band (5, 6) aufgebaut ist, bei dem die jeweils benachbarten Wendellagen der Hülle sich jeweils teilweise überlappen.

3. Elektrisches Kabel nach Anspruch 1, dadurch gekennzeichnet, dass die rohrförmige Sperrhülle (4) aus einem wenigstens zweilagigen Band (5, 6) aufgebaut ist, das längsaxial derart unter Bildung einer Rohrhülle um die Kabelseele (2) press-eng anliegend gelegt ist, dass die Seitenränder des die Hülle bildenden Bandes (11) parallel zueinander verlaufen und die rohrförmige Hülle eine längsaxiale Zone besitzt, im Bereich derer seitenrandnahe Teile des sie bildenden Bandes (11) überlappend verlaufen.

4. Elektrisches Kabel nach Anspruch 1 bis 3, dadurch gekennzeichnet, dass die durch eine Fibridschicht (6) gebildete Sperrhülleninnenseite unmittelbar und press-eng an der Dichtmasse enthaltenden Kabelseele und die durch Folie gebildete Aussenseite der Sperrhülle (4) unmittelbar an die Innenseite des wenigstens einlagigen Kabelschutzmantels (9) angrenzt, wobei die Fibridschicht (6) der Sperrhülle (4) Dichtmasse (7) enthält.

5. Elektrisches Kabel nach Anspruch 1 bis 3, dadurch gekennzeichnet, dass die durch Folie (12) gebildete Innenseite der rohrförmigen Sperrhülle (11) unmittelbar und press-eng an die Dichtmasse (3) enthaltende Kabelseele und die durch die Fibridschicht (13) gebildete Aussenseite der Sperrhülle unmittelbar an die Innenseite des wenigstens einlagigen Kabelschutzmantels (9) angrenzt.

6. Elektrisches Kabel nach Anspruch 1 bis 3, dadurch gekennzeichnet, dass die durch eine erste Fibridschicht (16) gebildete Innenseite der Sperrhülle (14) unmittelbar sowie press-eng an die Dichtmasse (3) enthaltende Kabelseele (2) und die durch die zweite Fibridschicht (17) gebildete Aussenseite der Sperrhülle (14) unmittelbar an die Innenseite des wenigstens einlagigen Kabelschutzmantels (9) angrenzt und sich zwischen den beiden Fibridschichten eine diese jeweils tragende hydrophobe Kunststofffolie (15) befindet und bei dem die erste Fibridschicht der Sperrhülle Dichtmasse (18) enthält.

7. Elektrisches Kabel nach Anspruch 1 bis 6, dadurch gekennzeichnet, dass die Fibridschicht (6, 13) bzw. die Fibridschichten (16, 17) der Sperrhüllen (4, 11, 14) im Kabel aus Polypropylen- oder Polyethylenfibriden oder aus einem Gemisch aus Polypropylen- und Polyethylenfibriden besteht.

8. Elektrisches Kabel nach Anspruch 1 bis 7, dadurch gekennzeichnet, dass die Trägerfolie (5, 12, 15) der Sperrhülle (4, 11, 14) des Kabels aus streckorientierter Polyesterfolie oder aus Polypropylenfolie besteht.

## Claims

1. Electric cable with a protective sheathing (9, 10) which comprises at least one layer and with a barrier jacket (4, 11, 14) arranged inside the cable, which encloses the cable core (2) impregnated with a sealing compound (3), wherein the tubular barrier jacket (4, 11, 14) is formed of a strip which has at least two layers and comprises a hydrophobic support film (5, 12, 15) of a plastic material and a hydrophobic fibrid layer (6, 13, 16, 17) provided on at least one surface of the support film (5, 12, 15), the inside of the tubular barrier jacket (4, 11, 14) being directly adjacent to and tightly pressed against the cable core (2) impregnated with a sealing compound (3) and its outside being directly adjacent to the inside of the protective sheathing (9, 10) which comprises at least one layer.

2. An electric cable as claimed in claim 1, wherein the tubular barrier jacket (4) is formed of a strip (5, 6) which has at least two layers and is helically wound around and tightly pressed against the cable core (2), such that the adjoining helical layers of the jacket, in each case, partly overlap.

3. An electric cable as claimed in claim 1, wherein the tubular barrier jacket (4) is formed of a strip (5, 6) which has at least two layers and is placed around the cable core (2) in the direction of the longitudinal axis thereof to form a tubular jacket which is tightly pressed against the core, in such a manner that the lateral edges of the strip (11) forming the jacket are parallel to each other and the tubular jacket possesses a zone along its longitudinal axis, where the portions which are close to the lateral edges of the strip (11) forming the jacket extend in an overlapping arrangement.

4. An electric cable as claimed in claims 1 to 3, wherein the inside of the barrier jacket formed by a fibrid layer (6) is directly adjacent to and tightly pressed against the cable core containing a sealing compound and the outside of the barrier jacket (4) formed by a film is directly adjacent to the inside of the protective cable sheathing (9) which comprises at least one layer, the fibrid layer (6) of the barrier jacket (4) containing a sealing compound (7).

5. An electric cable as claimed in claims 1 to 3, wherein the inside of the tubular barrier jacket (11) formed by a film (12) is directly adjacent to and tightly pressed against the cable core containing a sealing compound (3) and the outside of the barrier jacket formed by the fibrid layer (13) is directly adjacent to the inside of the protective cable sheathing (9) which comprises at least one layer.

6. An electric cable as claimed in claims 1 to 3, wherein the inside of the barrier jacket (14) formed by a first fibrid layer (16) is directly adjacent to and tightly pressed against the cable core (2) containing a sealing compound (3) and the outside of the barrier jacket (14) formed by the second fibrid layer (17) is directly adjacent to the inside of the protective cable sheathing (9) which comprises at least one layer and a hydrophobic plastic film (15) supporting the two fibrid layers is disposed between the layers, the first fibrid layer of the barrier jacket containing a sealing compound (18).

7. An electric cable as claimed in claims 1 to 6, wherein the fibrid layer (6, 13) or the fibrid layers (16, 17) of the barrier jackets (4, 11, 14) arranged in the cable comprise polypropylene or polyethylene fibrids or a mixture of polypropylene and polyethylene fibrids.

8. An electric cable as claimed in claims 1 to 7, wherein the support film (5, 12, 15) of the barrier jacket (4, 11, 14) arranged in the cable comprises a stretch-oriented polyester film or a polypropylene film.

**Revendications**

1. Câble électrique ayant une gaine protectrice (9; 10) à au moins une couche et une enveloppe d'arrêt (4; 11; 14) qui se trouve à l'intérieur du câble et qui entoure l'âme (2) du câble imprégnée de pâte d'étanchéité (3), caractérisé en ce que l'enveloppe d'arrêt tubulaire (4; 11; 14) est réalisée avec un ruban à au moins deux couches, constitué par une feuille porteuse hydrophobe (5; 12; 15) en matière plastique et une couche de fibrides hydrophobes (6; 13; 16; 17) sur au moins l'une des surfaces de la feuille porteuse (5; 12; 15), la surface intérieure de l'enveloppe d'arrêt tubulaire (4; 11; 14) étant au contact direct de l'âme (2) du câble imprégnée de pâte d'étanchéité (3) et étant pressée étroitement contre cette âme (2), et sa surface extérieure étant en contact direct avec la surface intérieure de la gaine protectrice (9; 10) à au moins une couche.

2. Câble électrique selon la revendication 1, caractérisé en ce que l'enveloppe d'arrêt tubulaire (4) est constituée par un ruban (5; 6) à au moins deux couches, enroulé de façon hélicoïdale autour de l'âme (2) du câble, âme contre laquelle il est pressé étroitement, les spires voisines de cette enveloppe se chevauchant en partie.

3. Câble électrique selon la revendication 1, caractérisé en ce que l'enveloppe d'arrêt tubulaire (4) est constituée par un ruban (5; 6) à au moins deux couches, posé axialement autour de l'âme (2) du câble, en formant une enveloppe tubulaire et en étant étroitement pressé contre l'âme, de telle façon que les bords latéraux du ruban (11) formant l'enveloppe soient parallèles et que l'enveloppe tubulaire présente une zone axiale dans laquelle des parties proches du bord latéral du ruban (11) qui la constituent se chevauchent.

4. Câble électrique selon l'une des revendications 1 à 3, caractérisé en ce que la surface intérieure de l'enveloppe d'arrêt, formée par une couche de fibrides (6), est en contact direct avec l'âme du câble contenant de la pâte d'étanchéité, âme contre laquelle elle est étroitement pressée, et que la surface extérieure de l'enveloppe d'arrêt (4), formée par une feuille, est en contact direct avec la surface intérieure de la gaine protectrice (9) du câble à au moins une couche, la couche de fibrides (6) de l'enveloppe d'arrêt (4) contenant de la pâte d'étanchéité (7).

5. Câble électrique selon l'une des revendications 1 à 3, caractérisé en ce que la surface intérieure de l'enveloppe d'arrêt tubulaire (11), formée par une feuille (12), est en contact direct avec l'âme (2) du câble contenant de la pâte d'étanchéité (3), âme contre laquelle elle est étroitement pressée, et que la surface extérieure de l'enveloppe d'arrêt (11) formée par la couche de fibrides (13) est en contact direct avec la surface intérieure de la gaine protectrice (9) du câble à au moins une couche.

6. Câble électrique selon l'une des revendications 1 à 3, caractérisé en ce que la surface intérieure de l'enveloppe d'arrêt (14), formée par une première couche de fibrides (16), est en contact direct avec l'âme (2) du câble contenant de la pâte d'étanchéité, âme contre laquelle elle est étroitement pressée, en ce que la surface extérieure de l'enveloppe d'arrêt (14), formée par la deuxième couche de fibrides (17), est en contact direct avec la surface intérieure de la gaine protectrice (9) du câble à au moins une couche, une feuille de matière plastique hydrophobe (15) portant les deux couches de fibrides se trouve entre celles-ci, câble dans lequel la première couche de fibrides de l'enveloppe d'arrêt contient de la pâte d'étanchéité (18).

7. Câble électrique selon l'une des revendications 1 à 6, caractérisé en ce que la couche de fibrides (6; 13) ou les couches de fibrides (16; 17) des enveloppes d'arrêt (4; 11; 14) du câble sont faites de fibrides de polypropylène ou de polyéthylène, ou d'un mélange de fibrides de polypropylène ou de polyéthylène.

8. Câble électrique selon l'une des revendications 1 à 7, caractérisé en ce que la feuille de plastique-support (5; 12; 15) de l'enveloppe d'arrêt (4; 11; 14) du câble est une feuille de polyester ou de polypropylène orientée par étirage.

FIG.I

FIG.II

# FIG. III